# EUROPEAN PATENT SPECIFICATION

(11) **EP 1 653 816 B1**
(45) Date of publication and mention of the grant of the patent: **28.02.2007**
(21) Application number: 04749196.4
(22) Date of filing: 12.08.2004
(51) Int. Cl.: A23L 3/06, A23L 3/18

(54) **APPARATUS AND METHOD FOR TREATMENT OF FOODSTUFFS WITH A GASEOUS MEDIUM FOR PROCESSING AND SUBSEQUENT DRYING**
GERÄT UND VERFAHREN FÜR DIE BEHANDLUNG VON NAHRUNGSMITTELN MIT EINEM GASFÖRMIGEN MEDIUM FÜR DIE VERARBEITUNG UND ANSCHLIESSENDE TROCKNUNG
DISPOSITIF ET PROCEDE SERVANT A TRAITER DES PRODUITS ALIMENTAIRES AU MOYEN D'UN AGENT DE TRAITEMENT GAZEUX ET A LES SECHER

(30) Priority: 15.08.2003 SE 0302220
(43) Date of publication of application: 10.05.2006
(73) Proprietor: Frigoscandia Equipment AB, 251 09 Helsingborg (SE)
(72) Inventor: PAHLSSON, Sten, S-260 35 Ödäkra (SE); NYRUP, Torsten, DK-3050 Humlebäck (SE)
(74) Representative: Andersson, Mikael Per Robert
(86) International application number: PCT/SE2004/001183
(87) International publication number: WO 2005/016032

(56) References cited:
- EP-A1- 0 923 868
- WO-A1-97/24569
- WO-A1-99/57496
- FR-A1- 2 367 260
- US-A- 3 733 710
- US-A- 4 480 535
- US-A- 5 078 120
- US-A- 5 343 715

## Description

### FIELD OF THE INVENTION

The present invention relates to an apparatus and a method for treatment of foodstuffs with water vapour for processing and subsequent drying.

### BACKGROUND ART

In food technology there are a very large number of apparatus for processing of products, primarily foodstuffs, by conditioned air or water vapour. Processing may relate to, for instance, freezing, cooling, heating, drying or boiling.

An endless conveyor belt is known from Applicant's own US 3,398,651. The conveyor belt is arranged to form along part of its extent a helical path, in which the conveyor belt forms a number of successive turns. The conveyor belt is made up of a great number of links which are designed so that the links in a first turn in the stack carry a subsequent second turn in the stack. This means that the conveyor belt is self-stacking. Conveyor belts of this type are advantageous since in a very limited space they can offer a long conveying distance and, thus, a long time of exposure in the desired environment for the products that are to be treated.

A further development of this concept is known from Applicant's own WO 99/57496 which relates to an apparatus for air treatment of foodstuffs with air or vapour. This apparatus comprises a conveyor belt of the type as described in the above-mentioned US 3,938,651. Due to the construction of the links and end closures in the stack, the stack is encapsulated in such a manner that a flow of air is passed through a central space defined by the helical path of the conveyor belt, and on to an annular space, which is defined by the construction of the conveyor belt and in which the foodstuffs are arranged. As the product moves through the stack, its parameters are changed, and consequently also the parameters of the air or water vapour. For instance cooling or heating of the product may be involved.

Additional processing steps are carried out in a conventional manner by the foodstuffs being conveyed through other apparatus for further treatment. US-A-5 343 715 discloses a helical conveyor freezer, EP-A-0 923 868 discloses an oven with at least two cooking zones and US-A-5 078 120 a cooking oven for slow cooking.

Thus apparatus for processing of foodstuffs in a separate step are previously known. Prior-art apparatus, however, do not allow continuous treatment in several steps in one and the same apparatus, such as boiling with subsequent drying and/or colouring.

### OBJECT OF THE PRESENT INVENTION

The object of the present invention is to provide an apparatus and a method for treatment of foodstuffs with gaseous medium for processing and subsequent drying.

The apparatus and the method should allow integrated treatment, i.e. processing as well as subsequent drying to be performed in one and the same apparatus.

The apparatus should be simple in terms of construction and space-saving.

### SUMMARY OF THE INVENTION

To achieve at least one of these objects and also other objects that will be evident from the following description, an apparatus and a method for treatment of foodstuffs with gaseous medium for processing and subsequent drying are provided according to the invention.

The term processing relates to treatment of foodstuffs by heating, for instance boiling or pasteurisation. Both packeted and non-packeted products can be treated.

The term drying relates to reduction of the water content of the products and primarily surface drying. The term drying may also comprise colouring of products, for instance a coating with egg and breadcrumbs.

As an example of fields of application, mention can be made of steam boiling of meat and pasta products or vegetables with subsequent surface drying before packeting. Another example is pasteurisation of bagged products such as ham and cheese. The apparatus can also be used to dry the surface of the bags immediately after processing before the subsequent labelling.

More specifically, an apparatus for treatment of foodstuffs for processing and subsequent drying is provided. The apparatus comprises an endless conveyor belt which along part of its length follows a helical path to form a stack, said helical path defining a central space in the stack, the conveyor belt having passages for letting a flow of a gaseous medium in the vertical as well as horizontal direction through the stack. The apparatus is characterised by an end portion of the stack, in which said stack is vertically surrounded by an encapsulation, a first means for supplying a first gaseous medium to said central space, and a second means for supplying a second gaseous medium to said encapsulation, said encapsulation being arranged to direct the flow of the second gaseous medium in such a manner that it is passed in the vertical direction from said encapsulation to the rest of the stack.

By arranging in this way an encapsulation of the stack, a division of the stack into two portions is obtained, which by the supply of the gaseous media allow treatment of foodstuffs in one and the same apparatus by both processing and subsequent drying. The length of the encapsulation as well as the height of the stack in combination with the conveying speed of the conveyor belt can be adjusted to the desired processing and drying respectively, i.e. the residence time in the non-encapsulated portion and the encapsulated portion, respectively. The parameters of the gaseous media can be adjusted to the desired processing and drying, respectively. The apparatus is simple in terms of construction. Moreover, its vertical extent makes it space-saving. The apparatus is usable whether the conveyor belt is self-stacking or not.

In a preferred embodiment, the first gaseous medium is humid water vapour, while the second gaseous medium is overheated water vapour. The use of water vapour in different states is very advantageous in food technology since it does not add any foreign substances. It is also an inexpensive medium. The first gaseous medium may also consist of saturated water vapour.

It is preferred for the encapsulation to be arranged at the upper part of the stack. This position means in fact that the humid water vapour, which is heavier than the overheated water vapour, will move downwards in the stack. As a result, the products can, while being conveyed through the stack when they successively increase their degree of drying, be conducted up through the stack and, thus, away from the humid water vapour and water condensed therefrom. By thus using gravity, no outer driving source is required for the vapour to move through the stack.

In a preferred embodiment, a first end closure is arranged to cover the conveyor belt at the upper edge of the encapsulation. The first end closure forms a roof over the conveyor belt and is arranged to direct, together with the encapsulation, the flow of the overheated water vapour down through the encapsulated stack portion and on to the non-encapsulated stack portion.

It is further preferable that a second end closure be arranged over the central space. The second end closure forms a roof which helps to direct the flow of the supplied humid water vapour through the stack.

It is preferred that lateral pieces at a longitudinal edge of the conveyor belt form an outer wall of the stack, which defines the stack outwards in the radial direction. It is also preferred that lateral pieces at a longitudinal edge of the conveyor belt form an inner wall of the stack, which defines the stack inwards in the radial direction to define said central space. By thus letting lateral pieces at the edges of the conveyor belt form side walls, a division of the stack into a central space and an annular space is obtained. Thus, no separate wall portions are required to define the stack, which would obstruct the cleaning of the apparatus, which is crucial in foodstuffs handling.

It is preferred that a third end closure be arranged against the lowermost turn formed in the stack, said third end closure being arranged transversely of the central space defined by the conveyor belt. The third end closure forms a bottom in the stack and should be slightly conical so as to facilitate draining.

It is preferred that the means for supplying humid water vapour comprise a fan. The fan helps to press the humid water vapour into the annular space so as there to come into contact with the products. The fan also provides better circulation of the humid water vapour in the stack by slowly circulating the vapour and, thus, preventing layering, in which warmer water vapour with a higher moisture content would collect in the upper part of the stack.

The conveying direction of the conveyor belt is preferably towards the encapsulation. This means that the conveying direction is contrary to gravity and, thus, to the motion of the overheated and the humid water vapour moving downwards in the stack.

It is preferred for the stack to be arranged in a housing comprising an inlet and an outlet for the conveyor belt. It is also preferred for the housing to comprise also a drain for draining off condensed water vapour.

In one embodiment the encapsulation has one outer and one inner circumferential wall having the same height, vertically surrounding a portion of the stack. In a second embodiment the encapsulation has one outer circumferential wall extending vertically along the full height of the stack, and one inner circumferential wall extending vertically along a portion of the stack, whereby said outer circumferential wall preferably has openings or perforations along the portion of the stack not covered by the inner circumferential wall. In a third possible embodiment the encapsulation has one outer and one inner circumferential wall extending along the full height of the stack, whereby both walls have openings or perforations along a portion of the stack.

According to another aspect, the invention relates to a method for treating foodstuffs for the purpose of processing and drying. The method comprises the following steps: providing an endless conveyor belt which along part of its length follows a helical path to form a stack, said conveyor belt having passages for letting a flow of a gaseous medium through the stack in the vertical as well as horizontal direction, the stack defining a central space, and the stack comprising a lower non-encapsulated stack portion and, adjacent thereto, an upper stack portion which is encapsulated in the vertical direction by an encapsulation, supplying a flow of a first gaseous medium to said central space for further conveyance to the non-encapsulated stack portion through said passages for letting through a flow of a first gaseous medium in the horizontal direction, supplying a flow of a second gaseous medium to said upper encapsulated stack portion, said encapsulation directing the flow of the second gaseous medium in such a manner that it flows in an essentially vertical direction from said encapsulated stack portion to said non-encapsulated stack portion, and the flow of the second gaseous medium, which enters the encapsulated stack portion and flows essentially vertically downwards, affecting the flow of the first gaseous medium which is conveyed to the non-encapsulated stack portion so that the first gaseous medium is prevented from flowing towards the encapsulated stack portion.

### DESCRIPTION OF DRAWINGS

The invention will now be described in more detail by way of example and with reference to the accompanying drawings.
Fig. 1 illustrates a self-stacking belt conveyor according to prior art.
Fig. 2 illustrates an apparatus for treatment of foodstuffs according to the present invention.

### TECHNICAL DESCRIPTION

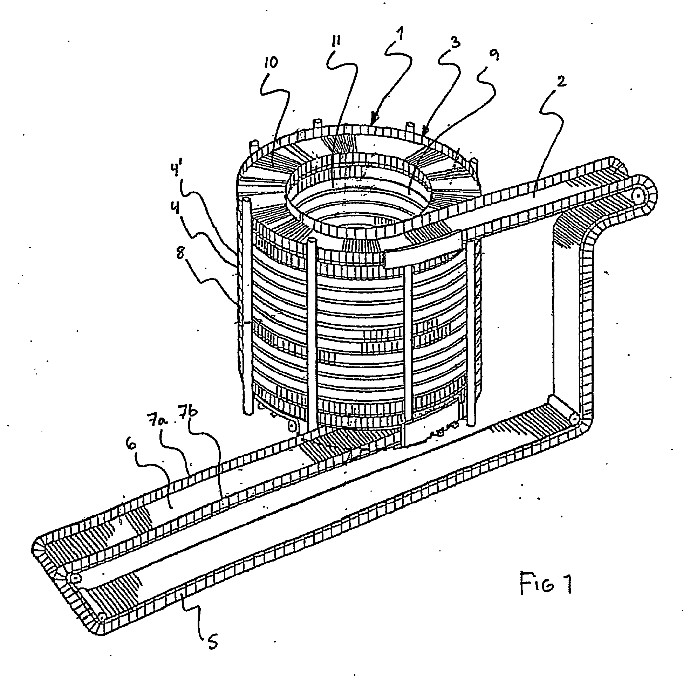

Fig. 1 illustrates a belt conveyor 1 according to prior art. The belt conveyor 1 comprises a conveyor belt 2 which, in the manner illustrated, is adapted to follow along part of its length a helical path comprising a number of successive turns 4 to form a stack 3. The shown conveyor belt 2 comprises a number of mutually articulated links 5 and can run straight, through curves upwards and downwards and also sideways.

The links 5 comprise a bottom part 6 and at least one lateral piece 7b which is arranged at the outer longitudinal edge of the conveyor belt 2. As shown, the links 5 may comprise one more lateral piece 7a at the inner longitudinal edge of the conveyor belt 2. The bottom part 6 constitutes a surface with some kind of perforation to allow water vapour to pass. The bottom part 6 may consist of, for instance, a mesh or a perforated metal sheet.

The links 5 are designed so as to allow a flow of water vapour both vertically and horizontally through the conveyor belt 2. This occurs through passages which may consist of, for instance, the play between two successive links 5, two successive turns 4 in the stack 3 or holes formed in the lateral pieces 7a, 7b. The vertical flow is ensured by the perforated bottom parts 6.

The lateral pieces 7a, 7b of a first turn 4 in the stack 3 carry at least one longitudinal edge of a second turn 4' arranged on top of the first turn. This means that the conveyor belt 2 is self-stacking. The lateral pieces 7b at the outer longitudinal edge of the links 5 in the conveyor belt 2 thus form an outer cylindrical wall 8 of the stack 3 and, if there are lateral pieces 7a at the inner longitudinal edge of the links 5 in the conveyor belt 2, an inner cylindrical wall 9 of the stack 3. This results in an annular space 10 between the outer cylindrical wall 8 and the inner cylindrical wall 9. Furthermore a cylindrical central space 11 is defined by the inner cylindrical wall 9.

As an alternative to the inner cylindrical wall 9, the inner cylindrical wall may comprise a wall (not shown) which is separated from the conveyor belt, for instance a wall formed from the outer periphery of a drum that is used to carry the conveyor belt at its inner longitudinal edge in the stack. Consequently such a wall comprises the previously described passages to ensure a flow of water vapour in the horizontal direction from the central space and on to the annular space.

In both alternatives, the annular space 10 is used as a duct for a flow of water vapour over and round the products that are conveyed on the conveyor belt 2.

Water vapour normally flows vertically through the stack 3 and its annular 10 and central 11 space. Water vapour may also flow through the central space 11 in such a manner that it is forced horizontally through the above-described passages into the annular space 10 so as there to be conducted in the vertical direction between the turns 4, 4' included in the stack 3. This results in a vertical as well as a horizontal flow through the stack.

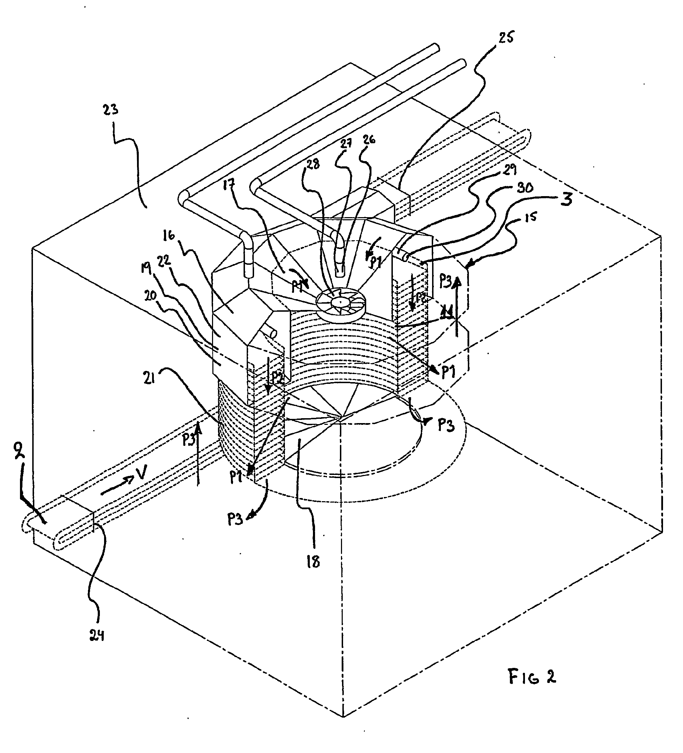

Fig. 2 is a schematic cross-sectional view of an apparatus 15 according to the invention. The apparatus 15 is based on a belt conveyor 1 as described above. Therefore the description of its general construction will not be repeated.

The apparatus 15 comprises a first end closure 16 which is arranged to cover the annular space 10 of the stack 3. The apparatus 15 also comprises a second end closure 17 which is arranged to cover the central space 11 of the stack 3. The two end closures 16, 17 can be said to form a roof of the apparatus 15. It will be appreciated that the first and the second end closure 16, 17 can be integrated with each other and form a common end closure which in one piece covers both the annular 10 and the central 11 space. The two end closures 16, 17 should be easy to remove so as to allow access for maintenance and cleaning.

The apparatus 15 further comprises a third end closure 18 which is arranged at the lower edge of the stack 3 against the lowermost turn formed in the stack 3 in such a manner as to form a horizontal bottom wall which abuts against the inner cylindrical wall 9. The third end closure 18 is preferably slightly conical.

An end portion 19 of the stack 3, and more specifically its upper part, is along the outer 8 and the inner 9 cylindrical wall encapsulated in such a manner that the stack 3 is divided into an encapsulated stack portion 20 and a non-encapsulated stack portion 21. The encapsulation 22 is essentially tight in the horizontal direction. The upper edge of the encapsulation 22 fits tightly against the first end closure 16 and its lower edge fits tightly against the outer 8 and the inner 9 cylindrical wall. The term "fits tightly against" relates to a reasonable degree of sealing that prevents a considerable flow of water vapour from passing. The necessary seal is established, for example, by means of a rubber strip.

The apparatus 15 is arranged in a housing 23. The housing 23 communicates with the environment through an inlet 24 and an outlet 25 arranged for the continuous conveyor belt 2. The conveyor belt 2 is thus allowed to pass through the inlet 24 and the outlet 25 to form its continuous path. Products are loaded and unloaded preferably outside the housing 23.

In the upper part of the central space 11 of the stack 3, a first means 26 is arranged to supply a flow of humid water vapour P1. In its simplest embodiment, the first means 26 consists of an inlet 27 that communicates with a fan 28. The means 26 is preferably arranged in the second end closure 17. The fan 28 is arranged to move the humid water vapour P1 through the stack 3.

In the upper part of the encapsulated stack portion 20, a second means 29 is arranged to supply a flow of overheated water vapour P2 through the encapsulated stack portion 20. In its simplest embodiment, the second means 29 consists of a tube 30 provided with a large number of orifices. The tube 30 extends through the annular space 10 between the first turn in the stack and the first end closure 16.

The overheated water vapour P2 is conducted through the encapsulated stack portion 20 and further down to the non-encapsulated stack portion 21 where it encounters the flow of the humid water vapour P1. The two flows P1 and P2 are combined in a common flow of humid water vapour P3.

The conveyor belt 2 has a conveying direction V towards the encapsulated stack portion 20, i.e. upwards in the stack 3 in the embodiment illustrated.

In the following the function of the apparatus 15 will be described. The products (not shown) adapted to be processed are placed on that part of the conveyor belt 2 which is arranged outside the housing 23. The products are conveyed to the housing 23 and up through the stack 3 in the annular space 10.

The housing 23 including the central space 11 and the annular space 10 in the non-encapsulated stack portion 21 is filled with humid water vapour by the first means 26 for supplying humid water vapour P1. The central space 11 has been filled with humid water vapour by the water vapour being moved by means of the fan 28 into the annular space 10 through the previously described passages in the conveyor belt 2. In the annular space 10, the humid water vapour will come into contact with the products and condense on them. Owing to the temperature difference in the housing 23, the humid water vapour moves towards a colder area, i.e. downwards through the annular space 10. Another driving force for the motion of the humid water vapour P1 downwards in the stack 3 is the flow of overheated water vapour P2, which will be described below.

Heating/boiling of the products for processing thereof occurs by means of the humid water vapour P1. The residence time, i.e. the processing time, of the products in the non-encapsulated stack portion 21 depends on the speed and the length of the conveyor belt 2 through this portion.

As the products are successively being conveyed up through the encapsulated stack portion 20, they are encountered by a flow of overheated water vapour P2. The overheated water vapour P2 moves downwards through the encapsulated portion 20 towards the non-encapsulated stack portion 21. In and in connection with the escaping from the non-encapsulated portion 21, the overheated water vapour P2 encounters more or less humid products as well as the humid water vapour P1, the overheated water vapour changing into humid water vapour and forming a common flow of humid water vapour P3.

As a result, the products on their way through the encapsulated stack portion 20 in the angular space 10 successively reduce their moist content on the surface, i.e. their surface dries up, before they finally leave the housing 23 through the outlet 25 formed therein for the conveyor belt 2. According to the degree of drying and the temperature of the overheated water vapour, also colouring of the products can take place.

As discussed above, the resulting moisture content depends on the residence time of the products in the encapsulated stack portion 20, but also on, for instance, the supplied flow of overheated water vapour P2.

It will be appreciated that during the process in the housing 23, water precipitates in liquid form. This is drained off from the housing 23 through a drain (not shown) in the third end closure 18. Water precipitated in the annular space 10 is suitably collected separately to be further drained off from the housing 23.

In the above described embodiment, the encapsulated stack portion 20 is arranged in the upper part of the stack 3. It will be appreciated that within the scope of the invention the encapsulated stack portion 20 can also be arranged in the lower part of the stack 3, in which case the conveyor belt 2 is driven in the opposite direction.

The encapsulation can be formed as one outer and one inner circumferential wall having the same height, vertically surrounding a portion of the stack. This is shown in fig 2. However, the encapsulation can also have other designs. By way of example, in one embodiment (not shown) the outer circumferential wall extends vertically along the full height of the stack, whereas the inner circumferential wall extends vertically along a portion of the stack. Such outer circumferential wall preferably has openings or perforations along the portion of the stack not covered by the inner circumferential wall. The encapsulation is thus essentially tight in the horizontal direction in the portion of the stack covered by the inner circumferential wall, and accordingly the encapsulation is arranged to direct the flow of the second gaseous medium in such a manner that it is passed in the vertical direction from said encapsulation to the rest of the stack. The first gaseous medium is not prevented from flowing into the annular space of the stack.

In another embodiment, both the outer and inner circumferential walls of the encapsulation extend along the full height of the stack, and both walls have openings or perforations along a portion of the stack. Accordingly, the non perforated portion directs the flow of the second gaseous medium in such a manner that it is passed in the vertical direction from the non perforated portion of the encapsulation to the rest of the stack, while the perforated portion of the encapsulation allows a flow of the first gaseous medium through the openings/perforations and into the annular space of the stack.

To sum up, the present invention relates to an apparatus 15 and a method for treatment of foodstuffs with water vapour for processing and subsequent drying.

The apparatus 15 is based on a belt conveyor 1 comprising an endless conveyor belt 2 that follows a helical path to form a stack 3.

In the preferred embodiment, the stack 3 comprises an encapsulation 22 which vertically surrounds an upper portion of the stack. The conveyor belt 2 is designed so as to comprise lateral pieces 7a, 7b which form an outer cylindrical wall 8 and an inner cylindrical wall 9 which define the stack in the radial direction. The side walls 8, 9 define a central space 11 and an annular space 10, respectively, in the stack 3. In the central space 11, a first means 26 is arranged to supply a flow of humid water vapour P1. Due to the construction of the conveyor belt 2, this flow P1 is made to enter the annular space 10 where it comes into contact with the products conveyed on the conveyor belt 2 for processing. Furthermore a flow of overheated water vapour P2 is supplied through the encapsulated stack portion 20. The encapsulation 22 directs the flow of the overheated water vapour P2 towards the non-encapsulated stack portion 21 where it comes into contact with the humid water vapour P1 and the humid products. The overheated water vapour P2 absorbs some of the moisture and is combined with humid water vapour P3 in a common flow. As a result, the products conveyed on the conveyor belt 2 successively reduce their moisture content while travelling through the encapsulated stack portion 20. The desired processing time and moisture content are controlled, inter alia, by the conveying speed and conveying distance of the conveyor belt 2 through the non-encapsulated stack portion 21 and the encapsulated stack portion 20, respectively. A further important factor is the relative humidity of the water vapour and the temperature of the overheated water vapour.

For controlling the temperature of the first gaseous medium, i.e. the humid water vapour, in the non-encapsulated portion 21, it is possible to supply the selected medium not only in gaseous form but also in liquid form. The supply occurs to the non-encapsulated stack portion 21. If the gaseous medium is, for instance, humid water vapour, it is thus possible to supply water in liquid form. The liquid is supplied atomised through nozzles (not shown). The technique is used in the first place if the temperature in the non-encapsulated portion 21 should be too high. Thus the supply does not occur continuously, but temporarily when required.

The apparatus has been described above based on a belt conveyor with a self-stacking conveyor belt. It will be appreciated that the invention can be applied with the same result to a belt conveyor comprising a non-self-stacking conveyor belt.

It will also be appreciated that the apparatus and the method with minor modifications can also be used for drying only. Then the drying can take place in two steps. In this case, the first gaseous medium and the second gaseous medium consist of the same substance, preferably overheated water vapour. However, the two media are given different temperatures.

The above description has been based on use of a first gaseous medium in the form of humid water vapour. In the same successful way, the first gaseous medium may consist of saturated water vapour.

According to the invention, an apparatus and a method for treatment of foodstuffs with water vapour for processing and subsequent drying are provided. The processing and the subsequent drying are integrated so as to be carried out in one and the same apparatus while the products are conveyed on a conveyor belt through the apparatus. The apparatus is space-saving and also simple in terms of construction.

It will be appreciated that the present invention is not limited to the shown and described embodiment of the inventive apparatus and method. Several modifications and variants are thus conceivable, and consequently the invention is defined exclusively by the appended claims.

## Claims

1. An apparatus (15) for treatment of foodstuffs for processing and subsequent drying, comprising
an endless conveyor belt (2) which along part of its length follows a helical path to form a stack (3), said helical path defining a central space (11) in the stack (3),
the conveyor belt (2) having passages for letting a flow of a gaseous medium in the vertical as well as horizontal direction through the stack (3),
**characterised by**
an end portion of the stack (3), in which said stack is vertically surrounded by an encapsulation (22),
a first means (26) for supplying a first gaseous medium to said central space (11), and
a second means (29) for supplying a second gaseous medium to said encapsulation (22),
said encapsulation (22) being arranged to direct the flow of the second gaseous medium in such a manner that it is passed in the vertical direction from said encapsulation (22) to the rest of the stack (3).

2. An apparatus as claimed in claim 1, in which the first gaseous medium is humid water vapour (P1).

3. An apparatus as claimed in claim 1, in which the first gaseous medium is saturated water vapour (P1).

4. An apparatus as claimed in claim 1, in which the second gaseous medium is overheated water vapour (P2).

5. An apparatus as claimed in claim 1, in which said encapsulation (22) is arranged at the upper part of the stack (3).

6. An apparatus as claimed in claim 1, in which a first end closure (16) is arranged to cover the conveyor belt (2) at the upper edge of the encapsulation (22).

7. An apparatus as claimed in claim 1, in which a second end closure (17) is arranged over the central space (11).

8. An apparatus as claimed in claim 1, in which lateral pieces (7a, 7b) at a longitudinal edge of the conveyor belt (2) form an outer wall of the stack (3), which defines the stack outwards in the radial direction.

9. An apparatus as claimed in claim 1, in which lateral pieces (7a, 7b) at a longitudinal edge of the conveyor belt (2) form an inner wall (9) of the stack (3) which defines the stack inwards in the radial direction to define said central space (11).

10. An apparatus as claimed in claim 1, in which a third end closure (18) is arranged against the lowermost turn formed in the stack, said third end closure being arranged transversely of the central space (11) defined by the conveyor belt (2).

11. An apparatus as claimed in claim 2 or 3, in which the first means (26) for supplying humid or saturated water vapour (P1) comprises a fan (28).

12. An apparatus as claimed in claim 1, in which the conveying direction (V) of the conveyor belt (2) is arranged towards the encapsulation (22).

13. An apparatus as claimed in claim 1, in which the stack (3) is arranged in a housing (23) comprising an inlet (24) and an outlet (25) for the conveyor belt (2).

14. An apparatus as claimed in claim 13, in which the housing (23) further comprises a drain for draining off condensed water vapour.

15. An apparatus as claimed in claim 1, in which the encapsulation (22) has one outer and one inner circumferential wall having the same height, vertically surrounding a portion of the stack (3).

16. An apparatus as claimed in claim 1, in which the encapsulation (22) has one outer circumferential wall extending vertically along the full height of the stack (3), and one inner circumferential wall extending vertically along a portion of the stack, whereby said outer circumferential wall preferably has openings or perforations along the portion of the stack (3) not covered by the inner circumferential wall.

17. An apparatus as claimed in claim 1, in which the encapsulation (22) has one outer and one inner circumferential wall extending along the full height of the stack (3), whereby both walls have openings or perforations along a portion of the stack (3).

18. A method for treating foodstuffs for the purpose of processing and drying, comprising the following steps
providing an endless conveyor belt (2) which along part of its length follows a helical path to form a stack (3), said conveyor belt (2) having passages for letting a flow of a gaseous medium through the stack (3) in the vertical as well as horizontal direction,
the stack (3) defining a central space (11), and
the stack (3) comprising a lower non-encapsulated stack portion (21) and, adjacent thereto, an upper stack portion (20) which is encapsulated in the vertical direction by an encapsulation (22),
supplying a flow of a first gaseous medium to said central space (11) for further conveyance to the non-encapsulated stack portion (20) through said passages for letting through a flow of a first gaseous medium in the horizontal direction,
supplying a flow of a second gaseous medium to said upper encapsulated stack portion (20),
said encapsulation (22) directing the flow of the second gaseous medium in such a manner that it flows in an essentially vertical direction from said encapsulated stack portion (20) to said non-encapsulated stack portion (21), and
the flow of the second gaseous medium, which enters the encapsulated stack portion (20) and flows essentially vertically downwards, affecting the flow of the first gaseous medium which is conveyed to the non-encapsulated stack portion (21) so that the first gaseous medium is prevented from flowing towards the encapsulated stack portion (20).

19. A method as claimed in claim 18, in which the first gaseous medium is humid water vapour (P1).

20. A method as claimed in claim 18, in which the first gaseous medium is saturated water vapour (P1).

21. A method as claimed in claim 18, in which the second gaseous medium is overheated water vapour (P2).

22. A method as claimed in claim 18, comprising the step of arranging the conveyor belt in a conveying direction (V) towards the encapsulated stack portion (20).

## Patentansprüche

1. Gerät (15) für die Behandlung von Nahrungsmitteln für die Verarbeitung und anschließende Trocknung, das
ein endloses Förderband (2) umfasst, welches entlang einem Teil seiner Länge einem geschraubten Pfad folgt, um einen Stapel (3) zu bilden, wobei der geschraubte Pfad einen zentralen Raum (11) in dem Stapel (3) definiert,
wobei das Förderband (2) Passagen besitzt, um einen Strom eines gasförmigen Mediums in der vertikalen genauso gut wie in der horizontalen Richtung durch den Stapel (3) zu lassen,
**gekennzeichnet durch**
einen Endabschnitt des Stapels (3), in welchem der Stapel **durch** eine Einkapselung (22) vertikal umschlossen ist,
ein erstes Mittel (26) zur Lieferung eines ersten gasförmigen Mediums zu dem zentralen Raum (11), und
ein zweites Mittel (29) zur Lieferung eines zweiten gasförmigen Mediums zu der Einkapselung (22),
wobei die Einkapselung (22) angeordnet ist, um den Strom des zweiten gasförmigen Mediums in einer solchen Weise zu leiten, dass er in der vertikalen Richtung von der Einkapselung (22) zu dem Rest des Stapels (3) geführt wird.

2. Gerät gemäß Anspruch 1, in welchem das erste gasförmige Medium humider Wasserdampf (P1) ist.

3. Gerät gemäß Anspruch 1, in welchem das erste gasförmige Medium gesättigter Wasserdampf (P1) ist.

4. Gerät gemäß Anspruch 1, in welchem das zweite gasförmige Medium überhitzter Wasserdampf (P2) ist.

5. Gerät gemäß Anspruch 1, in welchem die Einkapselung (22) an dem oberen Teil des Stapels (3) angeordnet ist.

6. Gerät gemäß Anspruch 1, in welchem ein erster Endverschluss (16) angeordnet ist, um das Förderband (2) an der oberen Kante der Einkapselung (22) zu bedecken.

7. Gerät gemäß Anspruch 1, in welchem ein zweiter Endverschluss (17) über dem zentralen Raum (11) angeordnet ist.

8. Gerät gemäß Anspruch 1, in welchem seitliche Stücke (7a, 7b) an einer Längskante des Förderbandes (2) eine äußere Wand des Stapels (3) bilden, welche den Stapel in radialer Richtung nach außen definiert.

9. Gerät gemäß Anspruch 1, in welchem seitliche Stücke (7a, 7b) an einer Längskante des Förderbandes (2) eine innere Wand (9) des Stapels (3) bilden, welche den Stapel in radialer Richtung nach innen definiert, um den zentralen Raum (11) zu definieren.

10. Gerät gemäß Anspruch 1, in welchem ein dritter Endverschluss (18) gegen die unterste, in dem Stapel gebildete Windung angeordnet ist, wobei der dritte Endabschluss transversal zu dem durch das Förderband (2) definierten zentralen Raum (11) angeordnet ist.

11. Gerät gemäß Anspruch 2 oder 3, in welchen das erste Mittel (26) zur Lieferung humiden oder gesättigten Wasserdampfes (P1) einen Lüfter (28) umfasst.

12. Gerät gemäß Anspruch 1, in welchem die Förderrichtung (V) des Förderbandes (2) auf die Einkapselung (22) zu angeordnet ist.

13. Gerät gemäß Anspruch 1, in welchem der Stapel (3) in einem Gehäuse (23) angeordnet ist, das einen Einlass (24) und einen Auslass (25) für das Förderband (2) umfasst.

14. Gerät gemäß Anspruch 13, in welchem das Gehäuse (23) ferner einen Ablauf zum Ablaufen des kondensierten Wasserdampfes umfasst.

15. Gerät gemäß Anspruch 1, in welchem die Einkapselung (22) eine äußere und eine innere umlaufende Wand mit der gleichen Höhe besitzt, die vertikal einen Abschnitt des Stapels (3) umgibt.

16. Gerät gemäß Anspruch 1, in welchem die Einkapselung (22) eine äußere umlaufende Wand besitzt, die sich vertikal entlang der vollen Höhe des Stapels (3) erstreckt; und eine innere umlaufende Wand, die sich vertikal entlang eines Abschnittes des Stapels erstreckt, wodurch die äußere umlaufende Wand vorzugsweise Öffnungen oder Perforationen entlang des Abschnittes des Stapels (3) besitzt, der nicht durch die innere umlaufende Wand bedeckt ist.

17. Gerät gemäß Anspruch 1, in welchem die Einkapselung (22) eine äußere und eine innere umlaufende Wand besitzt, die sich entlang der vollen Höhe des Stapels (3) erstrecken, wodurch beide Wände Öffnungen oder Perforationen entlang eines Abschnittes des Stapels (3) besitzen.

18. Verfahren zum Behandeln von Nahrungsmitteln für den Zweck der Verarbeitung und Trocknung, das die folgenden Schritte umfasst:
Bereitstellen eines endlosen Förderbandes (2), welches entlang einem Teil seiner Länge einem geschraubten Pfad folgt, um einen Stapel (3) zu bilden,
wobei das Förderband (2) Passagen besitzt, um einen Strom eines gasförmigen Mediums in der vertikalen genauso gut wie in der horizontalen Richtung durch den Stapel (3) zu lassen,
wobei der Stapel (3) einen zentralen Raum (11) definiert, und
der Stapel (3) einen unteren nicht eingekapselten Stapelabschnitt (21) und angrenzend dazu einen oberen Stapelabschnitt (20), welcher in der vertikalen Richtung durch eine Einkapselung (22) eingekapselt ist, umfasst,
Liefern eines Stroms eines ersten gasförmigen Mediums zu dem zentralen Raum (11) für weitere Beförderung zu dem nicht eingekapselten Stapelabschnitt (20) durch die Passagen zum Durchlassen eines Stroms eines ersten gasförmigen Mediums in der horizontalen Richtung,
Liefern eines Stroms eines zweiten gasförmigen Mediums zu dem oberen eingekapselten Stapelabschnitt (20),
wobei die Einkapselung (22) den Strom des zweiten gasförmigen Mediums in einer solchen Weise leitet, dass er in einer im wesentlichen vertikalen Richtung von dem eingekapselten Stapelabschnitt (20) zu dem nicht eingekapselten Stapelabschnitt (21) strömt, und
wobei der Strom des zweiten gasförmigen Mediums, welcher in den eingekapselten Stapelabschnitt (20) eintritt und im wesentlichen vertikal nach unten strömt, den Strom des ersten gasförmigen Mediums beeinflusst, welcher zu dem nicht eingekapselten Stapelabschnitt (21) geliefert wird, so dass das erste gasförmige Medium vor dem Zuströmen auf den eingekapselten Stapelabschnitt (20) geschützt wird.

19. Verfahren gemäß Anspruch 18, in welchem das erste gasförmige Medium ein humider Wasserdampf (P1) ist.

20. Verfahren gemäß Anspruch 18, in welchem das erste gasförmige Medium ein gesättigter Wasserdampf (P1) ist.

21. Verfahren gemäß Anspruch 18, in welchem das zweite gasförmige Medium ein überhitzter Wasserdampf (P2) ist.

22. Verfahren gemäß Anspruch 18, das den Schritt vom Anordnen des Förderbandes in einer Förderrichtung (V) auf den eingekapselten Stapelabschnitt (20) zu umfasst.

## Revendications

1. Appareil (15) pour le traitement d'aliments pour le conditionnement et un séchage ultérieur, comprenant :
une courroie de convoyeur sans fin (2) qui, le long d'une partie de sa longueur, suit une trajectoire hélicoïdale pour former un empilement (3), ladite trajectoire hélicoïdale définissant un espace central (11) dans l'empilement (3),
la courroie du convoyeur (2) comprenant des passages permettant de laisser un flux de milieu gazeux s'écouler dans la direction verticale ainsi que dans la direction horizontale à travers l'empilement (3),
**caractérisé par**
une portion d'extrémité de l'empilement (3) dans laquelle ledit empilement est entouré verticalement d'une encapsulation (22),
un premier moyen (26) permettant d'introduire un premier milieu gazeux dans ledit espace central (11), et
un second moyen (29) permettant d'introduire un second milieu gazeux dans ladite encapsulation (22),
ladite encapsulation (22) étant conçue pour diriger le flux du second milieu gazeux de façon à ce qu'il passe dans la direction verticale de ladite encapsulation (22) vers le reste de l'empilement (3).

2. Appareil selon la revendication 1, dans lequel le premier milieu gazeux est de la vapeur d'eau humide (P1)

3. Appareil selon la revendication 1, dans lequel le premier milieu gazeux est de la vapeur d'eau saturée (P1).

4. Appareil selon la revendication 1, dans lequel le second milieu gazeux est de la vapeur d'eau surchauffée (P2).

5. Appareil selon la revendication 1, dans lequel ladite encapsulation (22) est disposée au niveau de la partie supérieure de l'empilement (3).

6. Appareil selon la revendication 1, dans lequel un premier dispositif de fermeture d'extrémité (16) est conçu pour recouvrir la courroie du convoyeur (2) au niveau de l'arête supérieure de l'encapsulation (22).

7. Appareil selon la revendication 1, dans lequel un second dispositif de fermeture d'extrémité (17) est disposé au-dessus de l'espace central (11).

8. Appareil selon la revendication 1, dans lequel des pièces latérales (7a, 7b) au niveau d'une arête longitudinale de la courroie du convoyeur (2) forment une paroi externe de l'empilement (3), qui délimite l'empilement à l'extérieur dans la direction radiale.

9. Appareil selon la revendication 1, dans lequel des pièces latérales (7a, 7b) au niveau d'une arête longitudinale de la courroie du convoyeur (2) forment une paroi interne (9) de l'empilement (3), qui délimite l'empilement à l'intérieur dans la direction radiale afin de définir ledit espace central (11).

10. Appareil selon la revendication 1, dans lequel un troisième dispositif de fermeture d'extrémité (18) est disposé contre la spire inférieure formée dans l'empilement, ledit troisième dispositif de fermeture d'extrémité étant disposé transversalement par rapport à l'espace central (11) défini par la courroie du convoyeur (2).

11. Appareil selon la revendication 2 ou 3, dans lequel le premier moyen (26) permettant d'introduire de la vapeur d'eau humide ou saturée (P1) comprend un ventilateur (28).

12. Appareil selon la revendication 1, dans lequel la direction de convoyage (V) de la courroie du convoyeur (2) est orientée en direction de l'encapsulation (22).

13. Appareil selon la revendication 1, dans lequel l'empilement (3) est disposé dans un logement (23) comprenant une entrée (24) et une sortie (25) pour la courroie du convoyeur (2).

14. Appareil selon la revendication 13, dans lequel le logement (23) comprend en outre un drain pour le drainage de la vapeur d'eau condensée.

15. Appareil selon la revendication 1, dans lequel l'encapsulation (22) comprend une paroi circonférentielle externe et une paroi circonférentielle interne ayant la même hauteur, entourant verticalement une portion de l'empilement (3).

16. Appareil selon la revendication 1, dans lequel l'encapsulation (22) comprend une paroi circonférentielle externe qui s'étend verticalement le long de toute la hauteur de l'empilement (3) et une paroi circonférentielle interne qui s'étend verticalement le long d'une portion de l'empilement, moyennant quoi ladite paroi circonférentielle externe comprend de préférence des ouvertures ou des perforations le long de la portion de l'empilement (3) qui n'est pas recouverte par la paroi circonférentielle interne.

17. Appareil selon la revendication 1, dans lequel l'encapsulation (22) comprend une paroi circonférentielle externe et une paroi circonférentielle interne qui s'étendent verticalement le long de toute la hauteur de l'empilement (3), moyennant quoi les deux parois présentent des ouvertures ou des perforations le long d'une portion de l'empilement (3).

18. Procédé de traitement d'aliments pour un conditionnement et un séchage, comprenant les étapes suivantes :
réalisation d'une courroie de convoyeur sans fin (2) qui, le long d'une partie de sa longueur, suit une trajectoire hélicoïdale pour former un empilement (3), ladite courroie de convoyeur (2) comprenant des passages permettant de laisser un flux de milieu gazeux s'écouler à travers l'empilement (3) dans la direction verticale ainsi que dans la direction horizontale,
l'empilement (3) définissant un espace central (11), et
l'empilement (3) comprenant une portion d'empilement inférieure non encapsulée (21) et, adjacente à celle-ci, une portion d'empilement supérieure (20) qui est encapsulée dans la direction verticale par une encapsulation (22),
l'introduction d'un flux d'un premier milieu gazeux dans ledit espace centrall (11) afin de le convoyer plus loin vers la portion d'empilement non encapsulée (20) à travers lesdits passages permettant de laisser un flux d'un premier milieu gazeux s'écouler dans la direction horizontale,
l'introduction d'un flux d'un second milieu gazeux dans ladite portion d'empilement supérieure encapsulée (20),
ladite encapsulation (22) dirigeant le flux du second milieu gazeux de façon à ce qu'il s'écoule dans une direction essentiellement verticale de ladite portion d'empilement encapsulée (20) vers ladite portion d'empilement non encapsulée (21), et
le flux du second milieu gazeux, qui entre dans la portion d'empilement encapsulée (20) et s'écoule essentiellement verticalement vers le bas, ce qui influence le flux du premier milieu gazeux qui est convoyé vers la portion d'empilement non encapsulée (21) de façon à ce que le premier milieu gazeux ne puisse pas s'écouler vers la portion d'empilement encapsulée (20).

19. Procédé selon la revendication 18, dans lequel le premier milieu gazeux est de la vapeur d'eau humide (P1).

20. Procédé selon la revendication 18, dans lequel le premier milieu gazeux est de la vapeur d'eau saturée (P1).

21. Procédé selon la revendication 18, dans lequel le second milieu gazeux est de la vapeur d'eau surchauffée (P2).

22. Procédé selon la revendication 18, comprenant l'étape de disposition de la courroie du convoyeur dans une direction de convoyage (V) en direction de la portion d'empilement encapsulée (20).
